# EUROPEAN PATENT APPLICATION

(11) **EP 4 708 179 A1**
(43) Date of publication of application: **11.03.2026**
(21) Application number: 25185962.5
(22) Date of filing: 27.06.2025
(51) Int. Cl.: G06Q 30/0201, G06Q 30/0202, G06Q 30/0204, G06Q 30/0601, G06N 20/00

(54) **METHODS AND ELECTRONIC DEVICES FOR PROVIDING PRODUCT SELECTION REFERENCE INFORMATION**

(30) Priority: 04.09.2024 CN 202411240758
(71) Applicant: Hangzhou Alibaba International Internet Industry Co., Ltd., Hangzhou City, Zhejiang Province (CN)
(72) Inventor: JIANG, Jianming, Hangzhou City (CN); ZHANG, Guannan, Hangzhou City (CN); CHENG, Yapin, Hangzhou City (CN)
(74) Representative: Wu, Ting

(57) **Abstract**

Disclosed in the embodiments of the present application are a method for providing product selection reference information and an electronic device. The method comprises: receiving, in a first product information service system, a product selection request initiated by a first user regarding his/her procurement requirements; providing an operation option for inputting a targeted product selection category/industry, and providing a plurality of product selection solution options for the first user to select therefrom, wherein the plurality of product selection solution options are a plurality of pieces of product selection idea information predefined for selection needs related to bulk procurement or customized goods in the targeted product selection category/industry; and providing, according to the inputted targeted product selection category/industry and a selected target product selection solution, a product selection report, wherein the product selection report is generated by an artificial intelligence AI large model based on product supply data in the first product information service system and data generated by at least one second product information service system interacting with individual consumers during a sales process. The embodiments of the present application may enable users to find satisfactory sources of goods and make decisions more easily and quickly.

## Description

### TECHNICAL FIELD

The present application relates to the technical field of information processing, and in particular to a method for providing product selection reference information and an electronic device.

### BACKGROUND

In e-commerce scenarios related to cross-border trade, buyers are usually categorized as Class B buyers, which are different from Class C buyers (referring to individual consumers or terminal buyers who purchase products mainly for personal purposes). The so-called Class B buyers usually refer to bulk buyers or corporate buyers who procure goods in large quantities and may use the products for commercial purposes, such as wholesale, resale, etc. Therefore, the shopping patterns and interaction methods of the Class B buyers on e-commerce platforms are also different from those of Class C buyers.

In actual applications, Class B buyers (who are also operators in C-end e-commerce platforms or operators of off-line stores) need to continuously bring innovation to their products to better attract and retain customers and gain market competitive advantages. In order to achieve the above goal, in the prior art, before "sourcing products" through a cross-border e-commerce platform, Class B buyers usually need to have a rough idea of the current popular products by checking the "list" data in a C-end e-commerce platform, watching some hosts' "products-promoting" videos on a short video platform, etc., and then search for the same or similar products on the cross-border e-commerce platform. If a suitable product is found, they will send an inquiry to the store, and so on. Obviously, during the process of product selection and inquiry, Class B buyers may need to switch back and forth between a number of different platforms due to lack of data, lack of tools, lack of experience, etc., which is inefficient and makes it difficult to find sources of goods that they are happy with.

### SUMMARY

The present application provides a method for providing product selection reference information and an electronic device, enabling users to find satisfactory sources of goods and make decisions more easily and quickly.

The present application provides the following solutions.

A method for providing product selection reference information, comprising:
receiving, in a first product information service system, a product selection request initiated by a first user regarding his/her procurement requirements;
providing an operation option for inputting a targeted product selection category/industry, and providing a plurality of product selection solution options for the first user to select therefrom, wherein the plurality of product selection solution options are a plurality of pieces of product selection idea information pre-defined for selection needs related to bulk procurement or customized goods in the targeted product selection category/industry;
providing, according to the inputted targeted product selection category/industry and a selected target product selection solution, a product selection report, wherein the product selection report is generated by an artificial intelligence AI large model based on product supply data in the first product information service system and data generated by at least one second product information service system interacting with individual consumers during a sales process.

Herein, the first product information service system is a cross-border product information service system;
when the operation options and product selection solution options are provided, a plurality of targeted sales country/region options are further provided so that the first user may make a selection therefrom, the product selection solution options being related to a selected targeted sales country/region.

Herein, in the product selection report, at least one product category related to the targeted product selection category/industry is provided, and corresponding products recommended for each product category are provided, and a supply condition of each product category in the first product information service system and relevant statistical data of each product category during a sales process in the second product information service system are provided, the relevant statistical data comprises at least one of the following: average retail unit price, average sales volume, average search volume, competition situation, and matching situation with a current target product selection solution.

The method further comprises:
displaying, after receiving a request to view a detailed report of one of the product categories, the detailed report content corresponding to the product category, and the detailed report content comprises: content summarizing market performance of the product category during the sales process in the second product information service system, content summarizing behavior and actions or needs of individual consumers in the process of purchasing products in this product category, and following information for a plurality of recommended items under the product category: supply situation thereof in the first product information service system, relevant statistical data thereof during the sales process in the second product information service system, and content related to the estimated profit margin therefrom.

In the detailed report content of the product category, the relevant statistical data of the product category during the sales process in the second product information service system is displayed in charts.

The detailed report content of the product category further comprises: recommendation information for products that may be top opportunities under the product category.

The recommended products that may be top opportunities are further associated with a detailed report content with product granularity, wherein the detailed report content comprises: content summarizing market performance of a product during the sales process in the second product information service system, a supply condition thereof in the first product information service system, relevant statistical data thereof during the sales process in the second product information service system, and content related to the estimated profit margin therefrom.

A method for providing product selection reference information, comprising:
receiving, in a first product information service system, a product selection request sent by a client, wherein the product selection request carries information on targeted selection category/industry inputted by a user and selected target product selection solution information, wherein the target product selection solution information is selected by the user from a plurality of product selection solution options displayed on the client, the plurality of product selection solution options representing a plurality of pieces of product selection idea information pre-defined for selection needs related to bulk procurement or customized goods in a targeted product selection category/industry;
calling, according to the targeted product selection category/industry and a target product selection solution, an AI large model, the AI large model being configured to generate a product selection report based on product supply data in the first product information service system and data generated by at least one second product information service system interacting with individual consumers during a sales process; and
returning the product selection report to the client for display, such that the user may select products based on the product selection report.

A computer-readable storage medium having stored thereon a computer program which, when executed by a processor, implements the steps described in any of the above-described methods.

An electronic device, comprising:
one or more processors; and
a memory associated with the one or more processors, the memory being configured to store program instructions which, when read and executed by the one or more processors, execute the steps described in any of the above-described methods.

A computer program product, comprising computer programs/computer-executable instructions, wherein when the computer programs/computer-executable instructions are executed by a processor in an electronic device, the steps of any of the aforementioned method are implemented.

According to specific embodiments provided by the present application, the present application discloses the following technical effects:
Through the embodiments of the present application, in the first product information service system where Class B buyers are the main first users, product selection services may be provided for the first users. After the product selection request is initiated by a first user, an operation option for inputting a targeted product selection category/industry may be provided, and a plurality of product selection solution options for the first user to select therefrom may further be provided, wherein the plurality of product selection solution options are a plurality of pieces of product selection idea information pre-defined for selection needs related to bulk procurement or customized goods in the targeted product selection category/industry. Then, according to the inputted targeted product selection category/industry and a selected target product selection solution, a product selection report may be provided, wherein the product selection report is generated by an artificial intelligence AI large model based on product supply data in the first product information service system and data generated by at least one second product information service system interacting with individual consumers during a sales process. Through this manner, the first users, i.e., Class B buyers, may be able to organize and collect required information in the product procurement process by means of a single operation in the current first product information service system. In addition, by providing the first users with the plurality of product selection solution options to choose from, which are pre-defined for selection needs related to bulk procurement or customized goods, the first users are enabled to clarify their product selection ideas. Combined with the capabilities of the AI large model, users would thus be able to find satisfactory sources of goods and make decisions more easily and quickly.

Specifically, the product selection report may include specific recommended product information, which may be products that are available in the current first product information service system. As such, the first user may directly place an order or initiate an inquiry to the corresponding second user, etc. without having to switch back and forth between multiple different systems, thereby improving the efficiency.

Implementation of any solutions of the present application does not necessarily need to achieve all of the advantages described above.

### BRIEF DESCRIPTION OF DRAWINGS

To describe the technical solutions in the embodiments of the present application or in the prior art more clearly, the following briefly describes the accompanying drawings required for describing the embodiments. Apparently, the accompanying drawings in the following description are merely some embodiments of the present application, and those of ordinary skill in the art may further derive other accompanying drawings from these accompanying drawings without inventive efforts.
FIG. 1 is a schematic diagram of a system architecture according to an embodiment of the present application;
FIG. 2 is a flowchart of a client-side method according to an embodiment of the present application;
FIG. 3 is a schematic diagram of a first interface according to an embodiment of the present application;
FIG. 4 is a schematic diagram of a second interface according to an embodiment of the present application;
FIG. 5 is a schematic diagram of a third interface according to an embodiment of the present application;
FIG. 6 is a schematic diagram of a fourth interface according to an embodiment of the present application;
FIG. 7 is a schematic diagram of a fifth interface according to an embodiment of the present application;
FIG. 8 is a schematic diagram of a six interface according to an embodiment of the present application;
FIG. 9 is a flowchart of a service-side method according to an embodiment of the present application; and
FIG. 10 is a schematic diagram of an electronic device according to an embodiment of the present application.

### DESCRIPTION OF EMBODIMENTS

The technical solutions in the embodiments of the present application will be clearly and completely described below with reference to the accompanying drawings in the embodiments of the present application. Apparently, the described embodiments are merely some, but not all, of the embodiments of the present application. Based on the embodiments in the present application, all other embodiments obtained by those of ordinary skill in the art shall fall within the protection scope of the present application.

In the embodiment of the present application, in a product information service system (referred to as the B-end e-commerce platform) for B-end corporate buyers, in order to help the Class B buyers find their own satisfactory sources of goods more efficiently and accurately, the product supply data provided by such B-end e-commerce platform may be combined with the sales-related data in the product information service system (referred to as the C-end e-commerce platform) for C-end individual consumers buyers, thereby providing Class B buyers of the B-end e-commerce platform an integral tool, from production selection to procurement (Class B buyers may be referred to as the "first user" in the embodiments of this application, and accordingly, merchants such as suppliers are referred to as the "second user"). As in the embodiment of the present application, services are provided to users from the perspective of the B-end e-commerce platform, the products supply data in the B-end e-commerce platform is the internal data of the system and may be directly acquired from the relevant database. Sales data related to Class C buyers in the C-end e-commerce platform may be acquired in various ways. For example, if the B-end e-commerce platform has an associated C-end e-commerce platform, the associated C-end e-commerce platform may provide the B-end e-commerce platform with the relevant data, or the B-end e-commerce platform may also acquire the data by means of data purchasing via some channels. In the process of acquiring relevant data through data purchasing, data masking may be performed for relevant data. For example, data related to specific user privacy may be masked first, and then applied to the analysis in the embodiment of the present application.

The content delivered by the above tools may be specifically in the form of data products such as product selection reports. For example, the product selection report may include sales trends in C-end e-commerce platforms (including sales volume, search volume, retail price, consumer evaluation, consumer insight analysis, etc.), cost-profit analysis after comparing the retail price in the C-end e-commerce platform with the wholesale price in the B-end e-commerce platform, and service capability, production capability, and supply chain capability analysis of merchants in the B-end e-commerce platform, and the like. In one operation, Class B buyers are able to complete organization and collection of all information.

Herein, in the process of implementing the above solution, AI (Artificial Intelligence) technology may also be applied to the scenario of generating specific product selection reports, i.e., the specific product selection report can be generated by an AI large model. The so-called AI large model refers to a deep learning model containing massive parameters. Because of its large scale, this kind of AI large model can store and process a large amount of information, thereby achieving higher performance in various tasks. As such, the powerful natural language text understanding, logical thinking, and content generation capabilities of a pre-trained AI large model may be leveraged in analyzing and making inferences from the product supply data in the B-end e-commerce platform and the data generated in the sales process interacting with individual consumers on the C-end e-commerce platform, and generating corresponding product selection reports in accordance with a prescribed format.

In a specific implementation, because of the large number of products, if the traditional method is followed, which is to have the first user input the required product category or industry, followed by a product search, there will usually be a large number of eligible products. Users are not provided with the needed help in product selection. In view of this, the embodiment of the present application further provides the concept of product selection solutions, which may be a plurality of pieces of product selection idea information pre-defined for selection needs related to bulk procurement or customized goods in the targeted product selection category/industry. The above-mentioned product selection solutions may be defined manually, or may also be multiple product selection solutions generated by an AI large model through data analysis, and so on.

That is to say, the application scenario in the embodiment of the present application is mainly for Class B buyers, who select products for bulk procurement or for customizing the selected products for purposes like resale. The scenario is thus completely different from the one where products are purchased by individual consumers. Some experienced Class B buyers might have some product selection ideas when sourcing and procuring products, such as new products for resale, seasonal hot items, thin margin but quick turnover products, etc. The different product selection ideas mean that the corresponding supply structures are also different. However, in the prior art, these product selection ideas are only present in the minds of buyers, and a platform can only know which products the users have searched for and ordered. In reality, however, these experience-based product selection ideas are very helpful for users to find suitable sources of goods. Therefore, in the embodiment of the present application, a variety of product selection ideas may be defined specifically for such product selection needs in bulk procurement or customization of goods, and each product selection idea corresponds to a product selection solution. For example, solutions may specifically include selecting products based on seasonality, or selecting opportunity items that have a continuous upward sales trend, or selecting products with thin margin but good sales, etc. By defining a variety of product selection solutions in the system, it makes it easy for novice buyers who do not have much knowledge in cross-border e-commerce but want to try cross-border procurement to use good selection ideas for procurement and sales.

Since a variety of different product selection solutions are pre-defined in the system, after the first user initiates a product selection request, information such as names of these product selection solutions may be provided to the first user for selection. Then, a product selection report for this specific product selection solution can be generated through the AI large model. The process of generating product selection reports through the AI large model may also be completed in advance offline. For example, various possible product selection solutions may be enumerated, and the AI large model may generate multiple specific product selection reports based on each product selection solution, as well as B-end supplied data and C-end sales data. In this way, when the user selects a certain product selection solution, the pre-generated product selection report may be returned to the user. Since C-end data and B-end data usually change in real time, even if a product selection report is generated offline, it may still be updated according to a certain period. For example, the product selection report may be regenerated each day for each solution, and so on.

With this product selection report provided to the first user, the first user is able to acquire data related to the C-end sales of specific products without having to conduct manual analysis in other systems like C-end platforms. In addition, the product selection report usually includes information on recommended products. If the first user is interested in a certain product, the first user may directly procure the products on the current B-end platform, or send an inquiry to the merchant, etc. In this way, Class B buyers may be guided to have a direct and clear understanding of procurement deciding factors such as goods, merchants, and profits in procurement and sales, thereby helping Class B buyers to find satisfactory sources of goods and make decisions more easily and quickly.

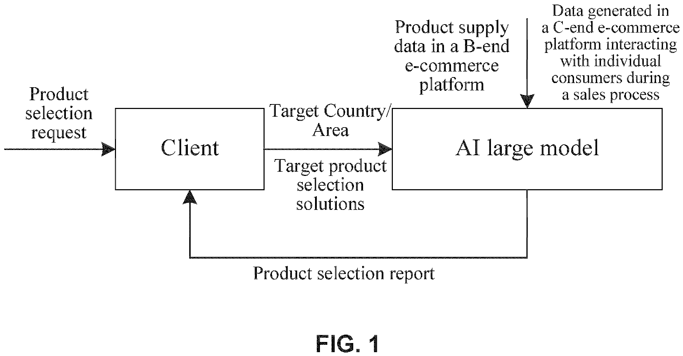

Referring to FIG. 1, from the perspective of system architecture, procurement requirement management services may be provided for Class B buyers in the product information service system for the same. Through this service, Class B buyers may directly create specific procurement requirements in the system and manage the same. In addition, after the procurement requirement is created, the client (which can be an application on a mobile or a webpage of the Web type, etc.) of the system may provide users with a product selection operation portal. After a specific product selection request is initiated through the portal, the user may enter the specific category or industry for which the products are to be selected. In addition, the aforementioned multiple optional product selection solutions may further be provided. After the Class B buyer selects one of the solutions, a corresponding product selection report may be provided. As mentioned previously, this product selection report may be generated by the AI large model after analyzing and making inferences from the specific target category/industry, target solution, the B-end product supply data, the C-end sales data, etc. Herein, the AI large model may generate the above-mentioned product selection report after receiving a specific product selection request, or it may also pre-generate corresponding product selection reports for a variety of different product selection solutions in an offline manner. Although FIG. 1 merely shows the first situation, it is only used as an example for illustration and should not be construed as limiting the protection scope of the embodiments of the present application.

The specific solutions provided by the embodiments of the present application are described in detail below.

### Embodiment I

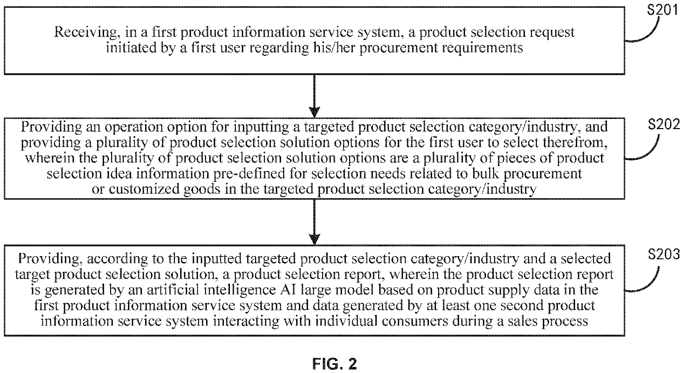

First, Embodiment I provides a method for providing product information from the perspective of a client. Referring to FIG. 2, the method may comprise:
S201: receiving, in a first product information service system, a product selection request initiated by a first user regarding his/her procurement requirements.

Herein, the first product information service system is one for Class B buyers. That is to say, the buyer users of this system are mainly Class B buyers. When Class B buyers have procurement requirements, they usually trade with suppliers on a bulk procurement or customized basis. In the embodiment of the present application, receiving, the first user may create a procurement requirement in this first product information service system, and may initiate a specific product selection request.

S202: providing an operation option for inputting a targeted product selection category/industry, and providing a plurality of product selection solution options for the first user to select therefrom, wherein the plurality of product selection solution options are a plurality of pieces of product selection idea information pre-defined for selection needs related to bulk procurement or customized goods in the targeted product selection category/industry.

After initiating a product selection request, the user may enter the specific information for the required product selection category/industry. In addition, multiple product selection solution options may further be provided for the first user to choose therefrom. As mentioned above, the specific product selection solution options may be pre-defined by the platform and provided to the first user for selection, so as to help the first user clarify his or her needs or product selection ideas, and then find the appropriate sources of goods accurately.

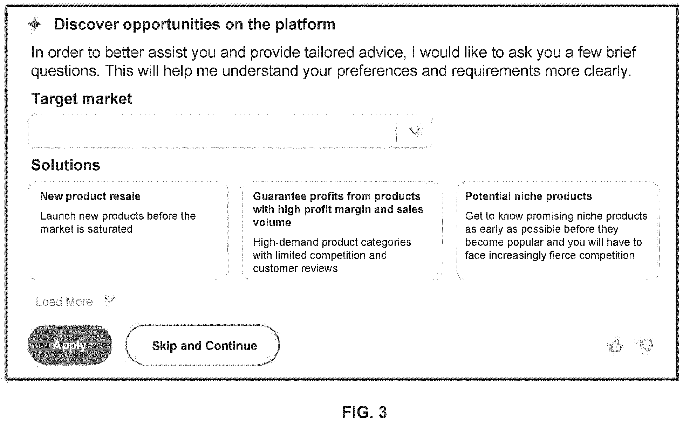

It should be noted here that in specific implementations, since the product information system for Class B buyers is usually a cross-border service system, the buyers and sellers may come from different countries. When procuring goods, Class B buyers usually have target sales market needs (i.e., the country/region to which the specific procured goods are usually sold is usually consistent with the country/region where a buyer is located); and the sales strategy of the suppliers on the platform may also be tied into specific countries/regions. For example, a supplier may only supply Class B buyers in certain specific countries/regions. A situation as such would also affect the user's product selection results. Therefore, in the specific implementations for cross-border scenarios, in addition to allowing the first user to select specific product categories/industries and product selection solutions, the first user may also select specific target sales markets, i.e., in which specific countries/regions these products will be sold. Accordingly, a specific product selection solution may also be related to a specific country/region, which means that different countries/regions may correspond to different product selection solutions. Therefore, in a specific implementation, the specific interface may be as shown in FIG. 3, through which the user can make a selection of the country/region and the desired solution. When multiple solution options are displayed, in addition to displaying the names thereof, corresponding explanatory description content may further be displayed to facilitate users' understanding thereof.

It should be noted that, specifically, when product selection solutions are displayed, a recommendation may be made therefor. There may be various specific recommendation bases. For example, a recommendation may be made based on the selections of product selection solutions by other first users, or a recommendation may be made based on the current first user's personal preference information, and so on.

S203: providing, according to the inputted targeted product selection category/industry and a selected target product selection solution, a product selection report, wherein the product selection report is generated by an artificial intelligence AI large model based on product supply data in the first product information service system and data generated by at least one second product information service system interacting with individual consumers during a sales process.

Then, after the user selects a product selection category/industry and a target product selection solution, a product selection report may be provided for the first user, wherein the product selection report is generated by an AI large model based on product supply data in the first product information service system and data generated by at least one second product information service system interacting with individual consumers during a sales process. Since the specific product selection report is related to the product selection category/industry, target product selection solution, and even target countries/regions, the data inputted into the AI large model includes not only the supply data in the B-end system and the sales data in the C-end system, but also information about the product selection category/industry, target product selection solution, and target countries/regions. In addition, the data may further include information about the content fields and layouts required in the product selection report. These layouts may exist in the form of templates. The above information may be constructed as prompts and used to guide the AI large model to generate content.

The specific generated product selection report may contain different types of content. For example, in the product selection report, at least one product category related to the targeted product selection category/industry may be provided, and corresponding products recommended for each product category may also be provided; and a supply condition of each product category in the first product information service system and relevant statistical data of each product category during a sales process in the second product information service system may be provided. The relevant statistical data comprises: average retail unit price, average sales volume, average search volume, competition situation, and matching situation with a current target product selection solution.

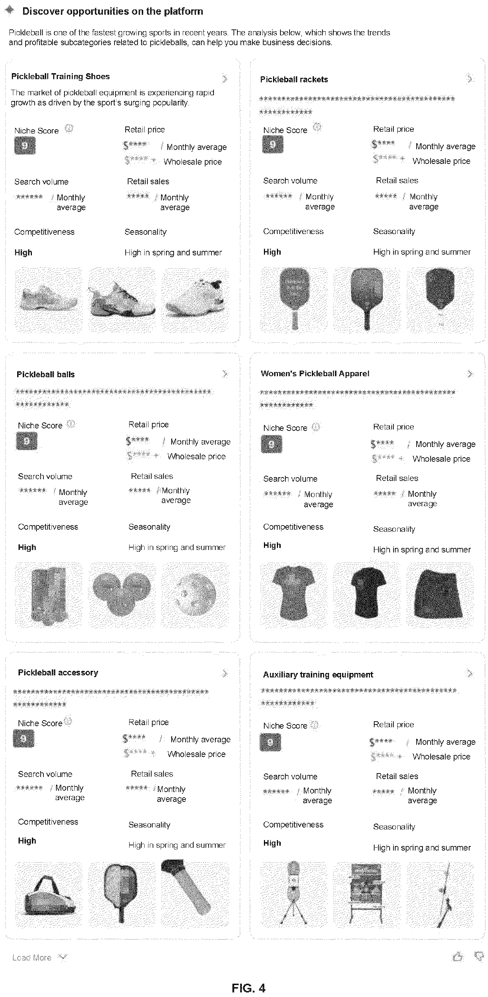

For example, in one example, assuming that a first user needs a product selection report related to "pickleballs," and the selected product selection solution is "seasonal sales trends." The specific product selection report may be as shown in FIG. 4, and the product selection report may provide information on multiple categories such as "pickleball training shoes," "pickleball rackets," "pickleballs," "women's clothing for pickleball sports," "pickleball accessories," and "pickleball auxiliary equipment." After the AI large model analyzes and makes inferences from C-end data and B-end data and determines specifically what categories to display, the determined categories may be some popular product categories in the related categories or industries or product categories that meet the current first user's preferences. For each product category, the supply situation thereof in the first product information service system and the relevant statistical data during a sales process in the second product information service system may be respectively displayed. In addition, information related to the recommendation reason for the specific product category may further be included. This recommendation reason may be present in text, and the specific text content may also be generated by the AI large model.

For example, for the category "pickleball training shoes," the specific reason for recommendation may be: "Driven by the surge in popularity of this sport, the market of pickleball equipment is experiencing rapid growth." In addition, the following information of this category may be further displayed: the average wholesale price thereof in the current first product information service system, the average retail price thereof in the second product information service system, the average sales volume, the average search volume, the competitive advantages, and the matching status with the currently selected target selection solution (for example, for seasonal solutions, information such as "high in spring and summer" may be displayed), etc. For other categories, the specific content to be displayed may be similar to the above, and will not be described in detail herein again.

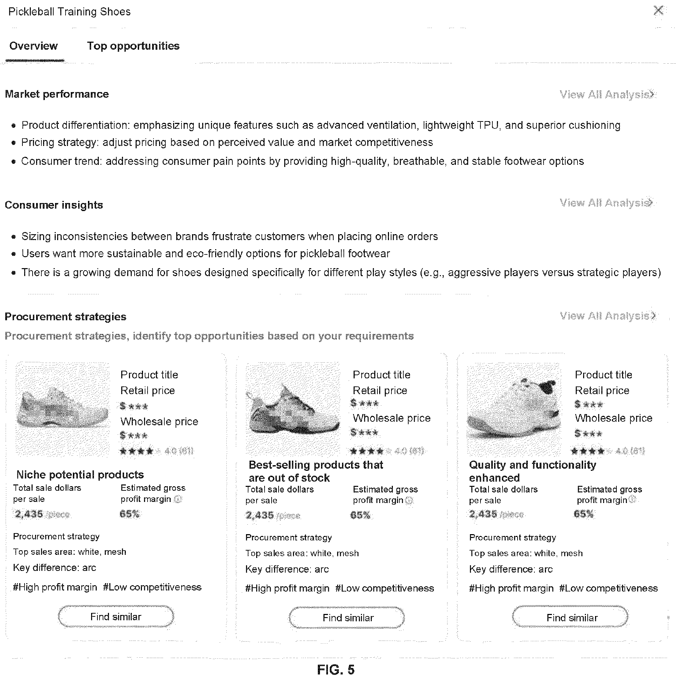

Specifically, after a request to view a detailed report for one of the product categories is received, the detailed report content corresponding to the product category may also be displayed. The detailed report content may include: content summarizing market performance of the product category during the sales process in the second product information service system, content summarizing behavior and actions or needs of individual consumers in the process of procuring products in this product category (which may be referred to as "consumer insights"), and following information for the plurality of recommended items under the product category: supply situation thereof in the first product information service system, relevant statistical data thereof during the sales process in the second product information service system, and content related to the estimated profit margin therefrom. For example, after clicking on the category of "Pickleball Training Shoes" as shown in FIG. 4, the detailed report content about this category may be as those shown in FIG. 5, which may include interpretive information like market performance, consumer insights, procurement strategies, and other aspects to help users understand this category from various aspects.

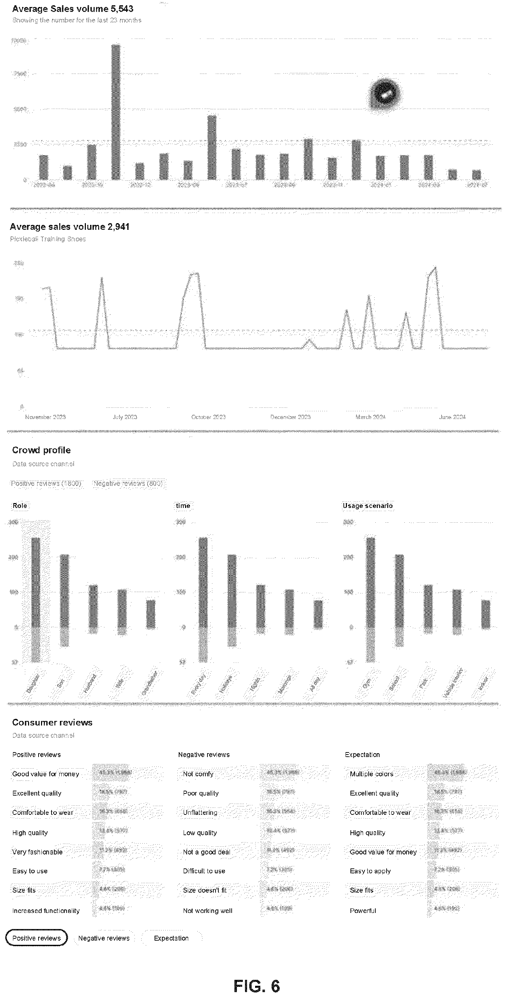

In addition, in the detailed report content for a specific product category, the relevant statistical data of the product category during the sales process in the second product information service system may further be displayed in charts. For example, as shown in FIG. 6 , the report may include information about average sales volume, average search volume, crowd profiling, consumer reviews, and so on. This chart type of representation can display specific information such as changing trends, allowing for a more intuitive and complete understanding of various statistical data.

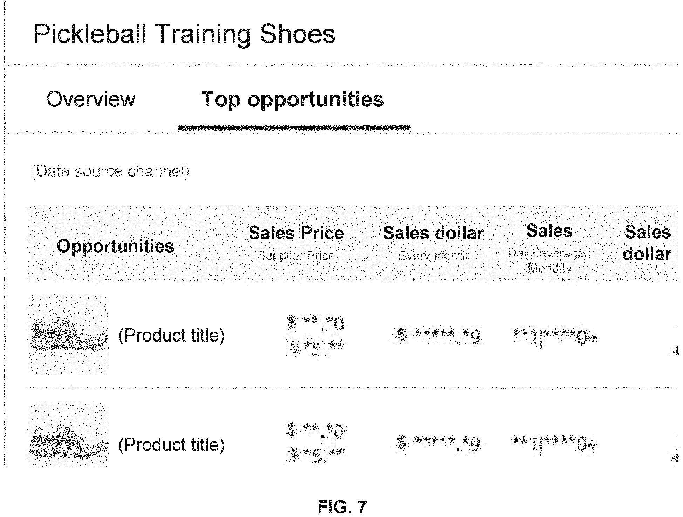

Additionally, the detailed report content of the product category may further comprise: recommendation information for products that may be top opportunities under this product category. Here, the so-called top opportunities may specifically refer to: products with broad market prospects and high profit margins that may not have been fully exploited or are in the midst of industry changes, or products that have a chance to become a "Top" product on the list in terms of sales volume, and the like. The definition of so-called top opportunities may certainly be inputted into the AI large model, which performs analysis and comparison on C-end data and B-end data, and then selects the products from the current category that belong to the top opportunities. For example, for the category "Pickleball Training Shoes," the provided list of top opportunities may be as shown in FIG. 7. Information on multiple fields such as wholesale price (supplier price), sales, sales volume, ratings, profit, key differentiators, etc. for each product may be displayed.

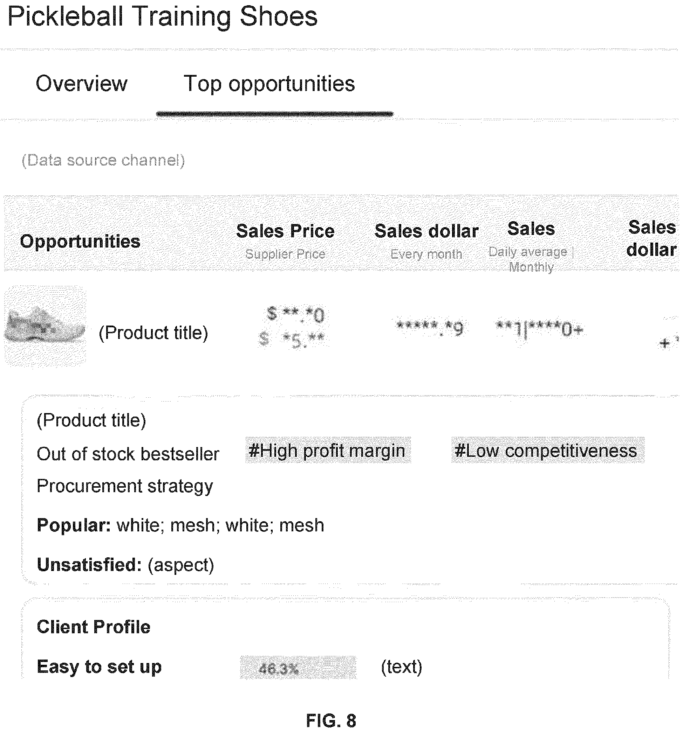

Further, the specific recommended products that may be top opportunities may be further associated with a detailed report content that shows product granularity. The detailed report content may comprise: content summarizing market performance of the product during the sales process in the second product information service system, a supply condition thereof in the first product information service system, relevant statistical data thereof during the sales process in the second product information service system, and content related to the estimated profit margin therefrom. For example, after the "Expand" option (indicated by a downward arrow in FIG. 7 ) corresponding to a certain product shown in FIG. 7 is clicked, the detailed report content may be displayed as shown in FIG. 8.

Thus, through the embodiments of the present application, in the first product information service system where Class B buyers are the main first users, product selection services may be provided for the first users. After the product selection request is initiated by a first user, an operation option for inputting a targeted product selection category/industry may be provided, and a plurality of product selection solution options for the first user to select therefrom may further be provided, wherein the plurality of product selection solution options may be a plurality of pieces of product selection idea information pre-defined for selection needs related to bulk procurement or customized goods in the targeted product selection category/industry. Then, according to the inputted targeted product selection category/industry and a selected target product selection solution, a product selection report may be provided, wherein the product selection report is generated by an artificial intelligence AI large model based on product supply data in the first product information service system and data generated by at least one second product information service system interacting with individual consumers during a sales process. Through this manner, the first users, i.e., Class B buyers, may be able to organize and collect required information in the product procurement process by means of a single operation in the current first product information service system. In addition, by providing the first users with the plurality of product selection solution options to choose from, which are pre-defined for selection needs related to bulk procurement or customized goods, the first users are enabled to clarify their product selection ideas. Combined with the capabilities of the AI large model, users would thus be able to find satisfactory sources of goods and make decisions more easily and quickly.

Specifically, the product selection report may include specific recommended product information, which may be products that are available in the current first product information service system. As such, the first user may directly place an order or initiate an inquiry to the corresponding second user, etc. without having to switch back and forth between multiple different systems, thereby improving the efficiency.

### Embodiment II

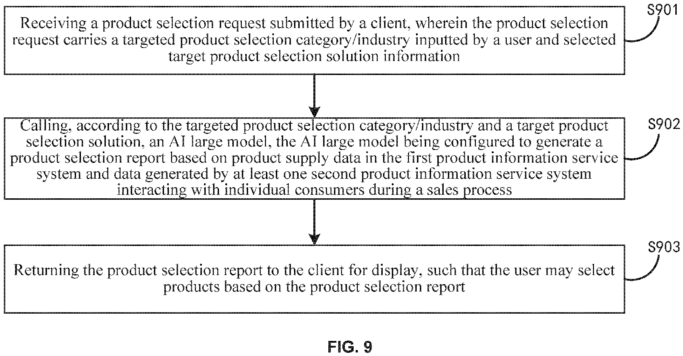

Embodiment II corresponds to Embodiment I, and provides a method for providing product selection reference information from the perspective of a server. Referring to FIG. 9, the method may comprise:
S901: receiving, in a first product information service system, a product selection request sent by a client, wherein the product selection request carries information on targeted selection category/industry inputted by a user and selected target product selection solution information, wherein the target product selection solution information is selected by the user from a plurality of product selection solution options displayed on the client, the plurality of product selection solution options representing a plurality of pieces of product selection idea information pre-defined for selection needs related to bulk procurement or customized goods in a targeted product selection category/industry;
S902: calling, according to the targeted product selection category/industry and a target product selection solution, an AI large model, the AI large model being configured to generate a product selection report based on product supply data in the first product information service system and data generated by at least one second product information service system interacting with individual consumers during a sales process; and
S903: returning the product selection report to the client for display, such that the user may select products based on the product selection report.

For the parts not described in detail in Embodiment II, reference may be made to Embodiment I and the other parts of this specification, which will not be described herein again.

It should be noted that the embodiments of the present application may involve the use of user data. In practical applications, user-specific personal data may be used in the solutions described herein to the extent permitted by applicable laws and regulations (e.g., explicit consent from the users, effective notification to the users, etc.) in compliance with applicable laws and regulations of the country where the solutions are implemented.

Corresponding to Embodiment I, the embodiment of the present application further provides an apparatus for providing product selection reference information. The apparatus may include:
a product selection request receiving unit, configured for receiving, in a first product information service system, a product selection request initiated by a first user regarding his/her procurement requirements;
an option providing unit, configured for providing an operation option for inputting a targeted product selection category/industry, and providing a plurality of product selection solution options for the first user to select therefrom, wherein the plurality of product selection solution options are a plurality of pieces of product selection idea information pre-defined for selection needs related to bulk procurement or customized goods in the targeted product selection category/industry; and
a product selection display unit, configured for providing, according to the inputted targeted product selection category/industry and a selected target product selection solution, a product selection report, wherein the product selection report is generated by an artificial intelligence AI large model based on product supply data in the first product information service system and data generated by at least one second product information service system interacting with individual consumers during a sales process.

Herein, the first product information service system is a cross-border product information service system;
the option providing unit may further be configured to: when the operation options and product selection solution options are provided, further provide a plurality of targeted sales country/region options so that the first user may make a selection therefrom, the product selection solution options being related to a selected targeted sales country/region.

Herein, in the product selection report, at least one product category related to the targeted product selection category/industry is provided, and corresponding products recommended for each product category are provided, and a supply condition of each product category in the first product information service system and relevant statistical data of each product category during a sales process in the second product information service system are provided, the relevant statistical data comprises at least one of the following: average retail unit price, average sales volume, average search volume, competition situation, and matching situation with a current target product selection solution.

In addition, the apparatus may further comprise:
a detailed report content display unit, configured for displaying, after receiving a request to view a detailed report of one of the product categories, the detailed report content corresponding to the product category, and the detailed report content comprises: content summarizing market performance of the product category during the sales process in the second product information service system, content summarizing behavior and actions or needs of individual consumers in the process of procuring products in this product category, and following information for a plurality of recommended items under the product category: supply situation thereof in the first product information service system, relevant statistical data thereof during the sales process in the second product information service system, and content related to the estimated profit margin therefrom.

In the detailed report content of the product category, the relevant statistical data of the product category during the sales process in the second product information service system may be displayed in charts.

Additionally, the detailed report content of the product category may further comprise: recommendation information for products that may be top opportunities under this product category.

The recommended products that may be top opportunities are further associated with a detailed report content with product granularity, wherein the detailed report content comprises: content summarizing market performance of a product during the sales process in the second product information service system, a supply condition thereof in the first product information service system, relevant statistical data thereof during the sales process in the second product information service system, and content related to the estimated profit margin therefrom.

Corresponding to Embodiment II, the embodiment of the present application further provides an apparatus for providing product selection reference information. The apparatus may include:
a request receiving unit, configured for receiving a product selection request submitted by a client, wherein the product selection request carries a targeted product selection category/industry inputted by a user and selected target product selection solution information, wherein the target product selection solution information is selected by the user from a plurality of product selection solution options displayed by the client, wherein the plurality of product selection solution options are a plurality of pieces of product selection idea information pre-defined for selection needs related to bulk procurement or customized goods in the targeted product selection category/industry;
a product selection report generating unit, configured for calling, according to the targeted product selection category/industry and a target product selection solution, an AI large model, the AI large model being configured to generate a product selection report based on product supply data in the first product information service system and data generated by at least one second product information service system interacting with individual consumers during a sales process; and
a product selection report returning unit, configured for returning the product selection report to the client for display, such that the user may select products based on the product selection report.

In addition, the embodiment of the present application further provides a computer-readable storage medium having a computer program stored thereon which, when executed by a processor, implements the steps of the methods described in any of the above-described method embodiments.

Also provided is an electronic device, comprising:
one or more processors; and
a memory associated with the one or more processors, the memory being configured to store program instructions which, when read and executed by the one or more processors, execute the steps of the methods described in any of the above-described method embodiments.

A computer program product, comprising computer programs/computer-executable instructions, wherein when the computer programs/computer-executable instructions are executed by a processor in an electronic device, the steps of the methods in the aforementioned method embodiments are implemented.

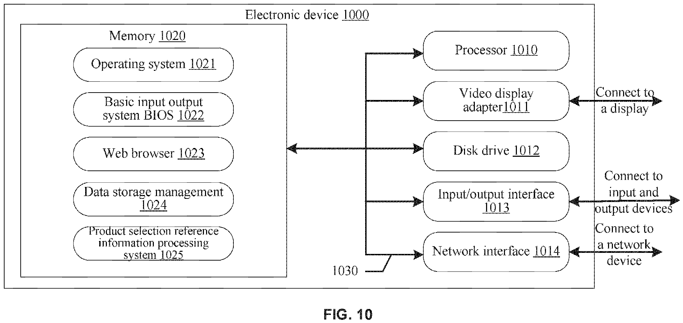

FIG. 10 exemplarily shows the architecture of the electronic device, which may specifically include a processor 1010, a video display adapter 1011, a disk drive 1012, an input/output interface 1013, a network interface 1014, and a memory 1020. The processor 1010, the video display adapter 1011, the disk drive 1012, the input/output interface 1013, and the network interface 1014 may be communicatively connected with the memory 1020 via a communication bus 1030.

Herein, the processor 1010 may be implemented using a general-purpose CPU (Central Processing Unit) processor, a microprocessor, an application specific integrated circuit (Application Specific Integrated Circuit, ASIC), or one or more integrated circuits, configured for executing relevant programs to implement the technical solutions provided in the present application.

The memory 1020 may be implemented in the form of a ROM (Read Only Memory), a RAM (Random Access Memory), a static storage device, a dynamic storage device, etc. The memory 1020 may store an operating system 1021 for controlling the operation of the electronic device 1000 and a basic input output system (BIOS) for controlling low-level operations of the electronic device 1000. In addition, a web browser 1023, a data storage management system 1024, a product selection reference information processing system 1025, and the like may also be stored therein. The product selection reference information processing system 1025 may be an application program for specifically implementing the operations of the aforementioned steps in the embodiments of the present application. In summary, when the technical solutions provided in the present application are implemented by software or firmware, the relevant program code is stored in the memory 1020 and is called and executed by the processor 1010.

The input/output interface 1013 is used to connect to an input/output module to implement information input and output. The input output/module may be configured as a component in the device (not shown in the figure), or it can be externally connected to the device to provide corresponding functions. The input devices may include a keyboard, a mouse, a touch screen, a microphone, various sensors, etc., and the output devices may include a display, a speaker, a vibrator, an indicator light, etc.

The network interface 1014 is used to connect to a communication module (not shown in the figure) to implement communication and interaction between the device and other devices. The communication module may achieve communication through wired means (such as USB, network cable, etc.) or wireless means (such as mobile network, WIFI, Bluetooth, etc.).

The bus 1030 comprises a pathway for transmitting information among the various components of the device (e.g., the processor 1010, the video display adapter 1011, the disk drive 1012, the input/output interface 1013, the network interface 1014, and the memory 1020).

It should be noted that although the above device only shows the processor 1010, the video display adapter 1011, the disk drive 1012, the input/output interface 1013, the network interface 1014, the memory 1020, the bus 1030, the device may further include other required components to achieve normal operation during a specific implementation process. Further, it would be appreciated by those skilled in the art that the above-mentioned device may only include components needed for implementing the solutions of the present application, and does not necessarily include all components shown in the figures.

As can be seen from the description of the above embodiments, it is clear that the present application can be implemented by means of software plus the necessary general hardware platform. Based on such an understanding, the part of the technical solution of the present application, which is essential or contributes to the prior art, can be embodied in the form of a software product. The computer software product can be stored in a storage medium, such as a ROM/RAM, a magnetic disk, and an optical disk, and include several instructions for enabling a computer device (which may be a personal computer, a server, a network device, or the like) to execute the methods described in the embodiments or some parts of the embodiments of the present application.

The various embodiments in this specification are all described in a progressive manner. The various embodiments may refer to other embodiments for the same or similar parts, and each of the embodiments focuses on the parts differing from the other embodiments. In particular, the system or system embodiments are basically similar to the method embodiments, the description for these embodiments is thus relatively brief, and the description of the method embodiments may be referred to for relevant details. The system and system embodiments described above are only examples, wherein the units described as separate components may or may not be physically separated; and the components displayed as units may or may not be physical units; that is, the units may be located in one place, or may be distributed on a plurality of network units. Some or all of the modules may be selected according to actual needs to achieve the objectives of the solutions of the embodiments. Those of ordinary skill in the art may understand and implement the embodiments without creative efforts.

The method for providing product selection reference information and the electronic device provided by the present application have been introduced in detail above. The principles and implementations of the present application are described with specific examples herein. The descriptions of the above embodiments are only used to help understand the methods and the core idea of the present application. At the same time, for those skilled in the art, according to the idea of the present application, there will be modifications in specific implementations and the application scope. In conclusion, the content of the present specification should not be construed as a limitation to the present application.

## Claims

1. A method for providing product selection reference information, comprising:
receiving, in a first product information service system, a product selection request initiated by a first user regarding his/her procurement requirements;
providing an operation option for inputting a targeted product selection category/industry, and providing a plurality of product selection solution options for the first user to select therefrom, wherein the plurality of product selection solution options are a plurality of pieces of product selection idea information pre-defined for selection needs related to bulk procurement or customized goods in the targeted product selection category/industry;
providing, according to the inputted targeted product selection category/industry and a selected target product selection solution, a product selection report, wherein the product selection report is generated by an artificial intelligence AI large model based on product supply data in the first product information service system and data generated by at least one second product information service system interacting with individual consumers during a sales process.

2. The method according to claim 1, wherein
the first product information service system is a cross-border product information service system;
when the operation options and product selection solution options are provided, a plurality of targeted sales country/region options are further provided so that the first user may make a selection therefrom, the product selection solution options being related to a selected targeted sales country/region.

3. The method according to claims 1 or 2, wherein the method comprises:
providing, in the product selection report, at least one product category related to the targeted product selection category/industry, and providing corresponding products recommended for each product category, and a supply condition of each product category in the first product information service system and relevant statistical data of each product category during a sales process in the second product information service system, the relevant statistical data comprises at least one of the following: average retail unit price, average sales volume, average search volume, competition situation, and matching situation with a current target product selection solution.

4. The method according to any one of claims 1 to 3, wherein the method further comprises:
displaying, after receiving a request to view a detailed report of one of the product categories, the detailed report content corresponding to the product category, and the detailed report content comprises: content summarizing market performance of the product category during the sales process in the second product information service system, content summarizing behavior and actions or needs of individual consumers in the process of purchasing products in this product category, and following information for a plurality of recommended items under the product category: supply situation thereof in the first product information service system, relevant statistical data thereof during the sales process in the second product information service system, and content related to the estimated profit margin therefrom.

5. The method according to claim 4, wherein the method comprises:
displaying, in the detailed report content of the product category, the relevant statistical data of the product category during the sales process in the second product information service system in charts.

6. The method according to claim 4, wherein
the detailed report content of the product category further comprises: recommendation information for products that may be top opportunities under the product category.

7. The method according to claim 6, wherein
the recommended products that may be top opportunities are further associated with a detailed report content with product granularity, wherein the detailed report content comprises: content summarizing market performance of the product during the sales process in the second product information service system, a supply condition thereof in the first product information service system, relevant statistical data thereof during the sales process in the second product information service system, and content related to the estimated profit margin therefrom.

8. A method for providing product selection reference information, comprising:
receiving, in a first product information service system, a product selection request sent by a client, wherein the product selection request carries information on targeted selection category/industry inputted by a user and selected target product selection solution information, wherein the target product selection solution information is selected by the user from a plurality of product selection solution options displayed on the client, the plurality of product selection solution options representing a plurality of pieces of product selection idea information pre-defined for selection needs related to bulk procurement or customized goods in a targeted product selection category/industry;
calling, according to the targeted product selection category/industry and a target product selection solution, an AI large model, the AI large model being configured to generate a product selection report based on product supply data in the first product information service system and data generated by at least one second product information service system interacting with individual consumers during a sales process; and
returning the product selection report to the client for display, such that the user may select products based on the product selection report.

9. A computer-readable storage medium having a computer program stored thereon which, when executed by a processor, executes the steps of the method according to any one of claims 1 to 8.

10. An electronic device, comprising:
one or more processors; and
a memory associated with the one or more processors, the memory being configured to store program instructions which, when read and executed by the one or more processors, execute the steps of the method according to any one of claims 1 to 8.

11. A computer program product, comprising computer programs/computer-executable instructions, wherein when the computer programs/computer-executable instructions are executed by a processor in an electronic device, the steps of the method according to any one of claims 1 to 8 are implemented.
